Europäisches Patentamt

European Patent Office

Office européen des brevets

(11) Publication number: **0 122 086 B1**

(12) **EUROPEAN PATENT SPECIFICATION**

(45) Date of publication of patent specification: 22.07.87

(51) Int. Cl.⁴: **C 08 G 59/08**, C 08 L 63/04

(21) Application number: 84302133.8

(22) Date of filing: 29.03.84

(54) A method for producing an encapsulated semiconductor using a curable epoxy resin composition.

(30) Priority: 04.04.83 JP 59593/83

(43) Date of publication of application:
17.10.84 Bulletin 84/42

(45) Publication of the grant of the patent:
22.07.87 Bulletin 87/30

(84) Designated Contracting States:
CH DE FR GB LI NL

(56) References cited:
FR-A-2 200 314
GB-A- 785 930
GB-A-2 070 020

PATENTS ABSTRACTS OF JAPAN, vol. 6, no.
231 (C-135)1109r, 17th November 1982 &
JP-A-57 133116

PATENTS ABSTRACTS OF JAPAN, vol. 6, no.
169 (C-122)1047r, 2nd September 1982 &
JP-A-57 83520

(73) Proprietor: SUMITOMO CHEMICAL COMPANY,
LIMITED
15 Kitahama 5-chome Higashi-ku
Osaka-shi Osaka 541 (JP)

(72) Inventor: Takagishi, Hisao
10-7, Koaza Nagashiba Oaza Shimokoma
Seika-cho Soraku-gun Kyoto-fu (JP)
Inventor: Kanagawa, Shuichi
3-20-26, Hannancho Abeno-ku
Oaska-shi Osaka-fu (JP)
Inventor: Kamio, Kunimasa
24-1-1108, ShinaSHIYA Ue
Suita-shi Osaka-fu (JP)
Inventor: Sumiyoshi, Kazuo
2200, Oaza Tsurusaki
Oita-shi Oita-ken (JP)

(74) Representative: Geering, Keith Edwin et al
REDDIE & GROSE 16 Theobalds Road
London WC1X 8PL (GB)

Courier Press, Leamington Spa, England.

**0 122 086**

**Description**

The present invention relates to a method of using an epoxy resin composition for encapsulating and laminating applications in electronic fields.

Various kinds of epoxy resin are widely used for paints and adhesives, as well as in laminating, molding and casting applications, because of the cured product being superior in various characteristics such as chemical resistance, mechanical properties, electrical properties, thermal resistance, water resistance, and adhesive properties. An example of a novolak-type epoxy resin particularly suited for use as an adhesive in the manufacture of glass fibre laminates is known from GB—A—785930. The preparation of a paint composition using an epoxy-novolak resin is illustrated in FR—A—2200314.

Epoxy resin is also used for encapsulating semiconductor chips such as transistors, ICs, and LSIs. In recent years increased reliability of the cured product of the epoxy resin has been required with increase in the degree of integration of semi-conductor chips and improvement in cured product properties such as electrical properties, thermal and water resistance, is still needed for epoxy resins for use in encapsulating and laminating applications. Such improvement has been sought, for example, by minimizing the content of ionic impurities (e.g. alkali metal halides) and hydrolyzable chlorine-containing resins in the epoxy resin. For example, a process for producing a novolak-type epoxy resin is described in GB—A—2070020 A in which a resin product is treated with a cyclizing agent to form an epoxy ring with the result that the hydrolizable chlorine content is reduced by a factor of around 100 times. The results of such attempts at improvement have not been wholly satisfactory.

We have found that phenolic and alcoholic hydroxyl group-containing substances which are produced as by-products during the production of epoxy resins adversely affect properties such as electrical properties, thermal resistance, water resistance, etc.

The present invention provides a method for producing an encapsulated semiconductor which comprises a) encapsulating a semiconductor with a curable epoxy resin composition comprising a novolak type epoxy resin which is produced from a substituted-phenol novolak and epihalohydrin, and b) curing the composition, characterised in that said epoxy resin has a hydroxyl group-containing substance content which corresponds to a maximum absorbance of 0.15 or less as measured in a 3% (W/V) dichloromethane solution of the epoxy resin, the absorbance being measured at a wave number of between 3570 and 3600 $cm^{-1}$ with an infrared spectrophotometer having a cell of 2 mm length.

Substituted phenols usable for production of the substituted-phenol novolak include alkyl, alkenyl, allyl, aryl, aralkyl and halogen-substituted phenols. Examples thereof are cresol, xylenol, ethylphenol, isopropylphenol, butylphenol, octylphenol, nonylphenol, vinylphenol, isopropenylphenol, allylphenol, phenylphenol, benzylphenol, chlorophenol and bromophenol (these compounds include o-, m- and p-isomers). Of these compounds, cresol, particularly o-cresol, is preferably used.

The substituted-phenol novolak can be obtained by condensing the substituted phenol with formaldehyde in the presence of an acid or alkali catalyst in conventional manner. The substituted phenols may be used with other phenols such as phenol, resorcinol, hydroquinone, catechol, in amounts insufficient to nullify the effect of the present invention (generally, not more than 50 mole % of the total phenols).

The novolak type epoxy resin useable in the present invention can be prepared by reacting substituted-phenol novolak with epihalohydrin, preferably epichlorohydrin, in the presence of alkali such as sodium hydroxide. The main reaction is the formation of desired glycidyl ether by reaction of phenolic hydroxyl group-containing compound with halohydrin. However, this reaction is always followed by various side reactions such as reaction between the formed glycidyl ether and unreacted phenolic hydroxyl group-containing compound, and hydrolysis of the formed glycidyl ether. Moreover, the reaction between the substituted phenol novolak and epihalohydrin can be carried out in the presence of alcohols such as methyl alcohol and propyl alcohol, and this reaction is also followed by side reactions such as between the formed diglycidyl ether and the alcohol. Further, some starting phenolic hydroxyl group-containing compound may remain unreacted.

For the reasons described above, the epoxy resin may be contaminated with alcoholic or phenolic hydroxyl group-containing substances. These hydroxyl group-containing substances have an absorption band in the frequency range 3570 to 3600 $cm^{-1}$ in their infrared absorption spectrum.

The novolak type epoxy resins useable in the present invention are those having a maximum such absorbance of 0.15 or less, preferably 0.1 or less, as measured under conditions described below.

A 3% (W/V) dichloromethane solution of the novolak type epoxy resin is prepared and put in a KBr cell of 2 mm length and its infrared absorption spectrum taken at 100 integration frequencies using a Fourier transformation type infrared spectrophotometer (for example, NICOLET 5DX made by Nicolet Co.). A maximum value of absorbance at a frequency between 3570 and 3600 $cm^{-1}$ is obtained in comparison with a blank (dichloromethane), provided that both the gain and the reference correction factor on the measurement are taken as 1.

The performances of the cured products can increase with decrease in the maximum absorbance of the novolak type epoxy resin from values of 0.15 or less. However, whilst the maximum absorbance exceeds 0.15, decrease does not improve performances; for example, there is no significant difference between the

2

performances of cured products obtained from those epoxy resins having maximum absorbances of 0.2 and 0.3.

Curing agents usable in the present invention include, for example, amines such as diaminodiphenyl-methane, diaminodiphenyl sulfone; novolak type phenol resins such as phenol and cresol novolak, and resol type phenol resins; polyphenols such as poly-p-vinylphenol resins; and acid anhydrides. The curing agent may be mixed with the novolak type epoxy resin defined above.

The epoxy resin composition may contain conventional additives such as fillers, curing accelerators, release agents, fire retardants, and surface-treating agents, from which a suitable additive or additives may be chosen depending on application purposes. The fillers include silica, alumina, talc, clay, glass fiber; the curing accelerators include imidazoles, tertiary amines; and the release agents include waxes, and metallic salts of fatty acids such as zinc stearate. The flame retardants include antimony trioxide, brominated epoxy resins, phosphorus compounds; and the surface-treating agents include silane coupling agents.

In addition to the conventional additives described above, known epoxy resins—e.g. bisphenol A type epoxy resins, polyol diglycidyl ether, polycarboxylic acid diglycidyl ether—may be added to the epoxy resin composition for use in the present invention.

The epoxy resin composition can be prepared in a manner such that a mixture of the novolak type epoxy resin defined above and any additive, if desired together with other known epoxy resin, is melt-kneaded on a roll or an extruder, and the resulting melt is cooled and then pulverized.

According to the invention, the epoxy resin composition is used for encapsulation of semi-conductors.

According to the invention, the encapsulation of semiconductors can be carried out using the resin composition in conventional manner such as transfer molding, compression molding and injection molding.

The present invention is illustrated by the following Examples. All parts in these Examples are by weight.

Reference Example

To a reactor equipped with a thermometer, stirrer, dropping funnel and apparatus for recovering water produced by reaction, were added 360 parts of o-cresol novolak having a hydroxyl value of 120 and a softening point of 98°C. and 2775 parts of epichlorohydrin, and the novolak was dissolved by stirring. The contents of the reactor were then heated to 105°C., and 275 parts of a 48% aqueous sodium hydroxide solution was added dropwise over 4 hours. During this period, the temperature of the reaction system was kept at 105° to 110°C., water produced by the reaction and water contained in the sodium hydroxide solution were distilled out of the reaction system in the form of an azeotropic mixture with epichlorohydrin, the vapor of the mixture was condensed, and epichlorohydrin in the condensed liquor was returned to the reaction system.

After the dropwise addition was completed, epichlorohydrin present in excess was removed by evaporation, and 1230 parts of methyl isobutyl ketone was added to the reaction mixture containing the formed resin and sodium chloride to dissolve the resin in the solvent. The insolubles were removed by filtration at 75° to 80°C. The filtrate was put into a separate reactor and 100 parts of n-heptane were added dropwise over 1 hour at room temperature with stirring. After 30 minutes' standing, the insolubles were removed by filtration, and the filtrate was concentrated to obtain the epoxy resin shown in Table 1.

In a manner similar to that described above, epoxy resin b to be shown in Table I were prepared. For the purpose of comparison, epoxy resin outside the scope of the present invention, f to h in Table 1 were prepared.

**0 122 086**

TABLE 1

Item

| Sample | Absorbance* | Contents in the resin | | | |
|---|---|---|---|---|---|
| | | Water** (%) | Hydrolyzable chlorine (ppm) | Na+ (ppm) | Cl− (ppm) |
| Epoxy resin a | 0.12 | 0.05 | 380 | <1 | 1 |
| Epoxy resin b | 0.07 | 0.04 | 450 | <1 | 1 |
| Epoxy resin c | 0.09 | 0.05 | 430 | 1 | 2 |
| Epoxy resin d | 0.15 | 0.06 | 390 | <1 | <1 |
| Epoxy resin e | 0.10 | 0.05 | 410 | 1 | 1 |
| Epoxy resin f | 0.19 | 0.06 | 420 | <1 | <1 |
| Epoxy resin g | 0.23 | 0.05 | 410 | 1 | 2 |
| Epoxy resin h | 0.31 | 0.05 | 390 | <1 | 1 |

*Measured using NICOLET 5DX made by Nicolet Co., as a Fourier transformation type infrared spectrophotometer.
**Measured by the Karl Fischer method. Under the measuring conditions defined in the present invention, the absorbance can not be affected by water, as far as its content is not more than 0.1%.

Examples and Comparative Examples

To 100 parts each of the epoxy resins shown in Table 1 were added 17 parts of Sumi-epoxy ESB-400 (tetrabromobisphenol A type epoxy resin having a bromine content of 48%; a commercial product of Sumitomo Chemical Company, Limited), 55 parts of a phenol novolak resin having a molecular weight of 800, 400 parts of silica powder, 2 parts of SumiCure D[2,4,6-tris(dimethylaminomethyl)phenol; a commercial product of Sumitomo Chemical Company, Limited)], 2 parts of carnauba wax, 1 part of calcium stearate, 4 parts of antimony trioxide and 1.5 parts of a silane coupling agent (KBM 403; a commercial product of Shin'etsu Kagaku Co.), and each mixture was well mixed to obtain each resin composition.

Each composition was heated and kneaded on a roll, and pulverized to prepare each molding material. Using the molding material thus prepared, transfer molding was carried out under molding condition of 170°C./3 minutes. The molded products obtained were post-cured for 5 hours in an oven kept at 180°C., and then measured for physical properties according to JIS K-6911. The results are shown in Table 2. Molded products a to e are made according to the invention, whereas molded products f to h fall outside the scope of the invention.

4

TABLE 2

| | Epoxy resin used | Example | | | | | Comparative example | | |
|---|---|---|---|---|---|---|---|---|---|
| | | a | b | c | d | e | f | g | h |
| Reactivity | 165°C (s) | 31 | 29 | 31 | 32 | 31 | 32 | 33 | 31 |
| | 150°C (s) | 40 | 41 | 39 | 40 | 40 | 41 | 41 | 40 |
| | 130°C (s) | 115 | 112 | 113 | 113 | 111 | 114 | 116 | 112 |
| Physical property | Heat distortion temperature (°C)* | 189 | 194 | 192 | 186 | 189 | 184 | 184 | 179 |
| | Tg** | 213 | 219 | 216 | 211 | 214 | 211 | 209 | 203 |
| | Dielectric breakdown strength (KV/mm) | 14.3 | 14.9 | 15.0 | 14.0 | 14.6 | 14.0 | 13.5 | 13.3 |
| | Volume resistivity ($\Omega$-cm) | $7.0\times10^{15}$ | $7.8\times10^{15}$ | $7.7\times10^{15}$ | $6.6\times10^{15}$ | $7.0\times10^{15}$ | $4.6\times10^{15}$ | $5.1\times10^{15}$ | $4.0\times10^{15}$ |
| | Specific gravity (at 20°C) | 2.00 | 2.01 | 2.01 | 2.00 | 1.99 | 2.00 | 1.98 | 2.02 |

*Load, 100 kg/cm² (according to JIS C-2241)
**Obtained from the data of dynamic viscoelasticity.

**0 122 086**

As shown in Table 2, there is no difference in the reactivity between the cured products of the present Examples and those of Comparative Examples, but the cured products of the present invention are superior in thermal resistance and electrical behaviour to the comparative ones.

The cured products of the Examples and Comparative Examples were measured for volume resistivity at a high temperature (150°C). The results are shown in Table 3.

TABLE 3

| | Epoxy resin used | Volume resistivity at 150°C ($\Omega$-cm) |
|---|---|---|
| | a | $5.6 \times 10^{13}$ |
| | b | $8.1 \times 10^{13}$ |
| Example | c | $7.9 \times 10^{13}$ |
| | d | $4.0 \times 10^{13}$ |
| | e | $7.8 \times 10^{13}$ |
| Comparative Example | f | $2.2 \times 10^{12}$ |
| | g | $2.5 \times 10^{12}$ |
| | h | $7.0 \times 10^{11}$ |

As shown in Table 3, the epoxy resin cured products made by the present invention show excellent electrical behaviour even at high temperatures.

Further, the cured products obtained were measured for percent water-absorption and reduction in the volume resistivity by the pressure cooker test (PCT) for testing moisture resistance. The PCT was carried out for 200 hours at 121°C×2 atm.

The results are shown in Table 4.

TABLE 4

| | Epoxy resin used | Volume resistivity ($\Omega$-cm) | Percent water absorption (%)* |
|---|---|---|---|
| | a | $1.3 \times 10^{12}$ | 0.85 |
| | b | $5.8 \times 10^{12}$ | 0.72 |
| Example | c | $5.2 \times 10^{12}$ | 0.77 |
| | d | $1.0 \times 10^{12}$ | 0.91 |
| | e | $5.1 \times 10^{12}$ | 0.85 |
| | f | $1.6 \times 10^{11}$ | 1.22 |
| Comparative Example | g | $1.9 \times 10^{11}$ | 1.29 |
| | h | $9.8 \times 10^{10}$ | 1.36 |

*A rate of weight gain.

As shown in Table 4, the epoxy resin cured products made by the present invention are superior in moisture resistance. In other words, the percent water-absorption is small; further, a reduction in the volume resistivity after the moisture resistance test is also small.

**Claims**

1. A method for producing an encapsulated semiconductor which comprises a) encapsulating a

6

semiconductor with a curable epoxy resin composition comprising a novolak type epoxy resin which is produced from a substituted-phenol novolak and epihalohydrin, and b) curing the composition, characterised in that said epoxy resin has a hydroxyl group-containing substance content which corresponds to a maximum absorbance of 0.15 or less as measured in a 3% (W/V) dichloromethane solution of the epoxy resin, the absorbance being measured at a wave number of between 3570 and 3600 cm$^{-1}$ with an infrared spectrophotometer having a cell of 2 mm length.

2. A method according to claim 1 wherein the epoxy composition comprises a curing agent selected from the group consisting of amines, phenol resins, polyphenols and acid anhydrides.

3. A method according to claim 1 or 2 wherein said resin composition comprises at least one additive selected from the group consisting of fillers, curing accelerators, release agents, fire retardants and surface-treating agents.

**Patentansprüche**

1. Verfahren zur Herstellung eines eingekapselten Halbleiters, wobei man a) einen Halbleiter mit einer härtbaren Epoxyharzmasse einkapselt, die ein Epoxyharz vom Novolak-Typ enthält, das aus einem substituierten Phenolnovolak und Epihalogenhydrin hergestellt ist, und b) die Masse härtet, dadurch gekennzeichnet, daß das Epoxyharz einen Gehalt an Hydroxylgruppenhaltiger Substanz aufweist, der einem Absorptionsmaximum von 0,15 oder weniger, gemessen in einer 3-%igen (Gew./Vol.) Dichlormethanlösung des Epoxyharzes, entspricht, wobei die Absorption bei einer Wellenzahl zwischen 3570 und 3600 cm$^{-1}$ mit einem Infrarot-Spektralphotometer mit einer Zelle von 2 mm Länge gemessen wird.

2. Verfahren nach Anspruch 1, dadurch gekennzeichnet, daß die Epoxymasse ein Härtungsmittel aus der Gruppe Amine, Phenolharze, Polyphenole und saure Anhydride enthält.

3. Verfahren nach Anspruch 1 oder 2, dadurch gekennzeichnet, daß die Harzmasse wenigstens einen Zusatz aus der Gruppe Füllstoffe, Härtungsbeschleuniger, Trennmittel, Flammschutzmittel und Oberflächenbehandlungsmittel enthält.

**Revendications**

1. Procédé de production d'un semiconducteur encapsulé, qui consiste: a) à encapsuler un semiconducteur avec une composition de résine époxy réticulable comprenant une résine époxy du type novolaque qui est produite à partir d'une résine novolaque phénolique substituée et d'épihalogénhydrine, et b) à faire réticuler la composition, caractérisé en ce que ladite résine époxy possède une teneur en substance contenant des groupes hydroxyle qui correspond à une absorbance maximale égale ou inférieure à 0,15, telle que mesurée dans une solution de la résine époxy à 3% (en poids/volume) dans le dichlorométhane, l'absorbance étant mesurée à un nombre d'ondes compris dans l'intervalle de 3570 à 3600 cm$^{-1}$ avec un spectrophotomètre infrarouge ayant une cellule de 2 mm de longueur.

2. Procédé suivant la revendication 1, dans lequel la composition de résine époxy contient un agent de réticulation choisi dans le groupe comprenant des amines, des résines phénoliques, des polyphénols et des anhydrides d'acides.

3. Procédé suivant la revendication 1 ou 2, dans lequel ladite composition de résine contient au moins un additif choisi dans le groupe comprenant des charges, des accélérateurs de réticulation, des agents de démoulage, des agents retardateurs de flamme et des agents de traitement de surface.